(19) Europäisches Patentamt

European Patent Office

Office européen des brevets

(11) Veröffentlichungsnummer: **0 122 602**
**B1**

(12) **EUROPÄISCHE PATENTSCHRIFT**

(45) Veröffentlichungstag der Patentschrift:
**26.10.88**

(21) Anmeldenummer: **84104114.8**

(22) Anmeldetag: **12.04.84**

(51) Int. Cl.⁴: **F 16 N 7/34,** F 16 N 7/32

(54) **Ölnebelgenerator.**

(30) Priorität: **13.04.83 JP 55100/83**

(43) Veröffentlichungstag der Anmeldung:
**24.10.84 Patentblatt 84/43**

(45) Bekanntmachung des Hinweises auf die Patenterteilung:
**26.10.88 Patentblatt 88/43**

(84) Benannte Vertragsstaaten:
**DE FR GB SE**

(56) Entgegenhaltungen:
**US - A - 2 913 234**
**US - A - 4 116 387**

**POLYTECHNISCH TIJDSCHRIFT. WERKTUIGBOUW, Band 37, Nr. 8, Augustus 1982, Seiten 66-69, Den Haag, NL; BAUMANN:"Centraal smeersysteem voor persluchtnetten"**

(73) Patentinhaber: **Shoketsu Kinzoku Kogyo Kabushiki Kaisha, 1-16-4, Shimbashi Minato-ku, Tokio (JP)**

(72) Erfinder: **Takeuchi, Masatosi SHOKETSU KINZOKU KOGYO CO. LTD., Soka Plant 938 Inari-Cho, Soka-City Saitama Prefecture (JP)**

(74) Vertreter: **Keil, Rainer A., Dipl.-Phys. Dr., KEIL & SCHAAFHAUSEN Patentanwälte Eysseneckstrasse 31, D-6000 Frankfurt am Main 1 (DE)**

## Beschreibung

Die Erfindung bezieht sich auf einen Ölnebelgenerator gemäss dem Oberbegriff des Anspruchs 1.

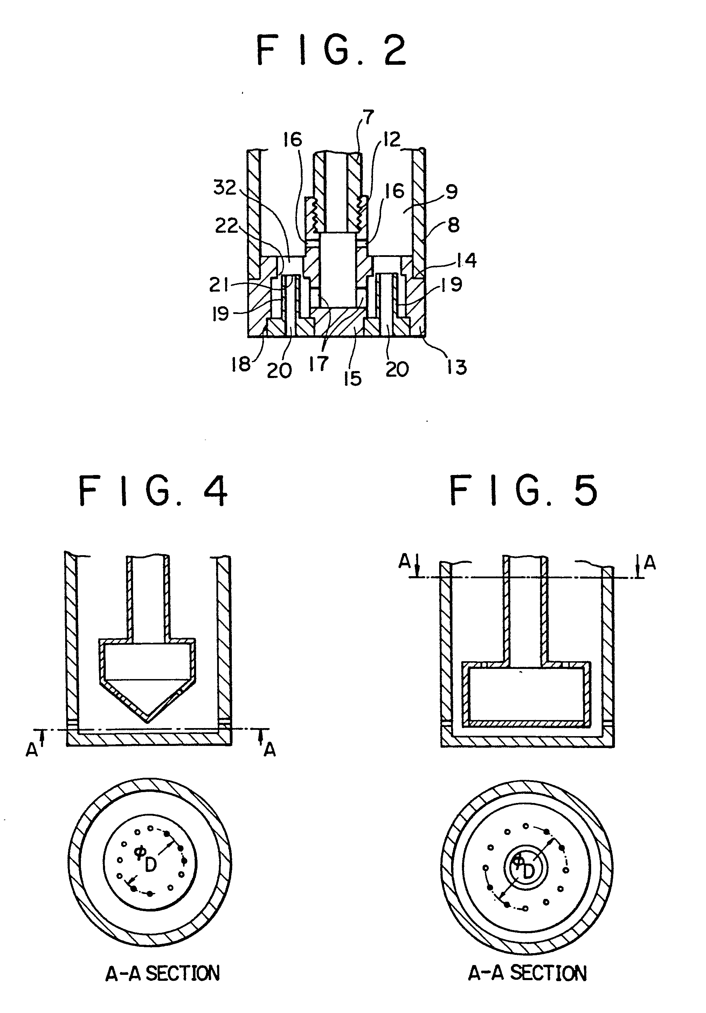

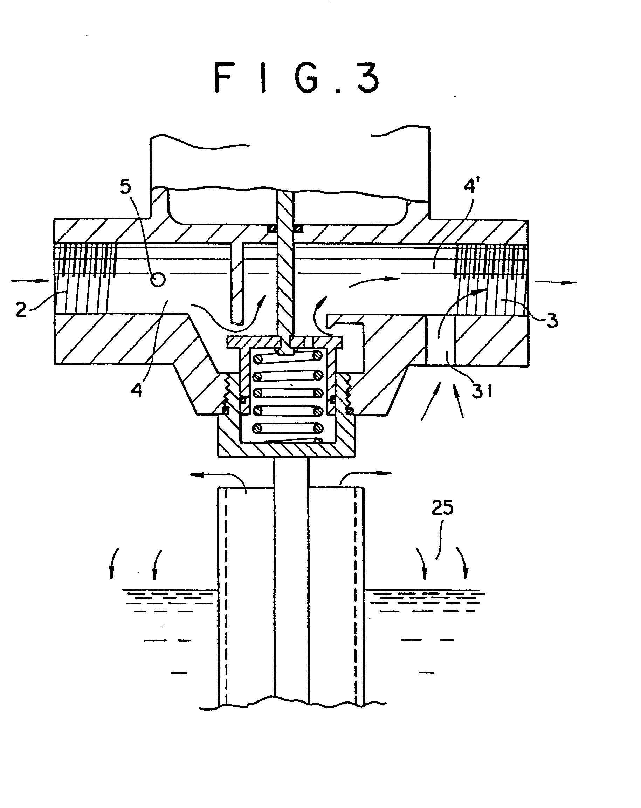

Bei diesen bekannten Ölnebelgeneratoren, wie sie bspw. in Polytechnische Tijdschrift Werktuigbouw, Band 37, Nr. 8, S. 66–69 beschrieben sind, ist der Ölnebelungsraum entsprechend dem Ölpegel des Ölbehälters mit Öl gefüllt. Die Austrittsöffnungen für die der Ölvernebelungseinrichtung zugeführten Druckluft sind unterhalb des Ölpegels angeordnet, so dass beim Emporsteigen der Druckluft Ölteilchen mitgerissen und ein Ölnebel im Ölvernebelungsraum erzeugt wird. In den Fig. 4 und 5 sind Einzelheiten der bekannten Lösung veranschaulicht. Nachteilig dabei ist die unbefriedigende Wirkung der Strömungsgeschwindigkeit der austretenden Luft in der Zone, wo die austretende Luft auf das Öl zur Bildung des Ölnebels auftrifft. Der Wirkungsgrad der Nebelbildung ist somit unbefriedigend. Darüber hinaus verändert sich mit Veränderungen des Ölpegels die Menge des erzeugten Ölnebels. Aus diesem Grunde ist es unmöglich, gleichmässig Ölnebel zu erzeugen.

Bei einem anderen bekannten Ölnebelgenerator, wie er in US-A-2 913 234 beschrieben ist, weist die Ölvernebelungseinrichtung eine für die Zuführung der Druckluft vorgesehene, vertikal im äusseren Ölbehälter angeordnete Leitung auf mit einem daran angrenzenden, in Längsrichtung sich erstreckenden Kanal, welcher an seinem unteren Ende in offener Strömungsverbindung mit dem äusseren Ölbehälter steht und an seinem oberen Ende geschlossen ist. Im Wandungsbereich zwischen der luftführenden Leitung und dem Kanal sind unterhalb des Ölpegels zwei mit Abstand voneinander angeordnete Luftdurchlässe vorgesehen, wobei der eine horizontal im Bodenbereich und der andere für eine aufwärts gerichtete Drucklufteinleitung schräg nach oben in den Kanal mündet. Der sich beim Zusammentreffen von eingedüster Luft und Öl ergebende Ölnebel wird über eine seitliche, oberhalb des Ölpegels angeordnete Austrittsöffnung aus dem Kanal in den oberen Bereich des äusseren Ölbehälters geleitet, welcher in Strömungsverbindung mit einem Ölnebelauslass steht. Auch bei dieser bekannten Vorrichtung ergibt sich eine geringe Wechselwirkung zwischen austretender Luft und dem im Kanal befindlichen Öl, verbunden mit einem geringen Wirkungsgrad der Ölnebelbildung. Daneben ist es auch hierbei nicht möglich, eine konstante Ölnebelmenge unabhängig von dem jeweiligen Ölpegel im Ölbehälter zu erzeugen.

Davon ausgehend liegt der Erfindung die Aufgabe zugrunde, einen Ölnebelgenerator der eingangs beschriebenen Art dahingehend zu verbessern, dass bei einfachem konstruktiven Aufbau und guter Zugänglichkeit der Ölvernebelungseinrichtung ein hoher Wirkungsgrad der Ölnebelbildung erreicht und die Erzeugung einer konstanten Ölnebelmenge unabhängig von dem jeweiligen Ölpegel im Ölbehälter ermöglicht ist.

Diese Aufgabe wird im wesentlichen durch die kennzeichnenden Merkmale des Anspruches 1 gelöst.

Hierdurch wird, entgegen dem Stand der Technik, nach welchem Öl von der Peripherie der Luftdüsenöffnung zugeführt wird, Öl von der Mitte einer Ölversorgungssektion zugeführt, während Luft von der Peripherie her austritt. Somit wird ein Auftreffen der Luft auf das Öl in Nachbarschaft der maximalen Luftströmungsgeschwindigkeit ermöglicht. Ausserdem wird die gesamte austretende Luft wirksam. Weitere vorteilhafte Ausgestaltungen ergeben sich aus den Unteransprüchen.

Während der Ölnebelbildung kann nach einem weiteren Aspekt der Erfindung zusätzlich Druckluft in einer Richtung senkrecht zu der Strömungsrichtung eingestossen werden, um eine feine Zerstäubung des Ölnebels zu erreichen, wodurch eine erhebliche Steigerung des Wirkungsgrades der Ölnebelbildung erzielt werden kann. Ausserdem ermöglicht der Unterdruck, der von der Strömungsgeschwindigkeit der eintretenden Luft erzeugt wird, einen wirkungsvolleren Einfluss auf die Ölzufuhr. Somit wird eine grössere Menge an Ölnebel mit weniger Luftströmung verglichen mit dem Stande der Technik erzielt. Ausserdem wird eine konstante Ölnebelmenge unabhängig von der Menge des in dem Ölbehälter vorhandenen Öls geliefert.

Der erfindungsgemässe Ölnebelgenerator weist einen herstellungstechnisch besonders günstigen konstruktiven Aufbau auf. Insbesondere die Ölvernebelungseinrichtung zeichnet sich durch eine bspw. für Reinigungszwecke erforderliche gute Zugänglichkeit aus, indem sie ohne Zerlegung der gesamten Vorrichtung am unteren Behälterkörper mit einem inneren Zylinder von dem unteren Ende der luftführenden Leitung ab – bzw. aufschraubbar ist.

Weitere Ziele, Merkmale, Vorteile und Anwendungsmöglichkeiten der vorliegenden Erfindung ergeben sich aus der nachfolgenden Beschreibung eines Ausführungsbeispieles anhand der beiliegenden Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Patentansprüchen oder deren Rückbeziehung.

Es zeigt:

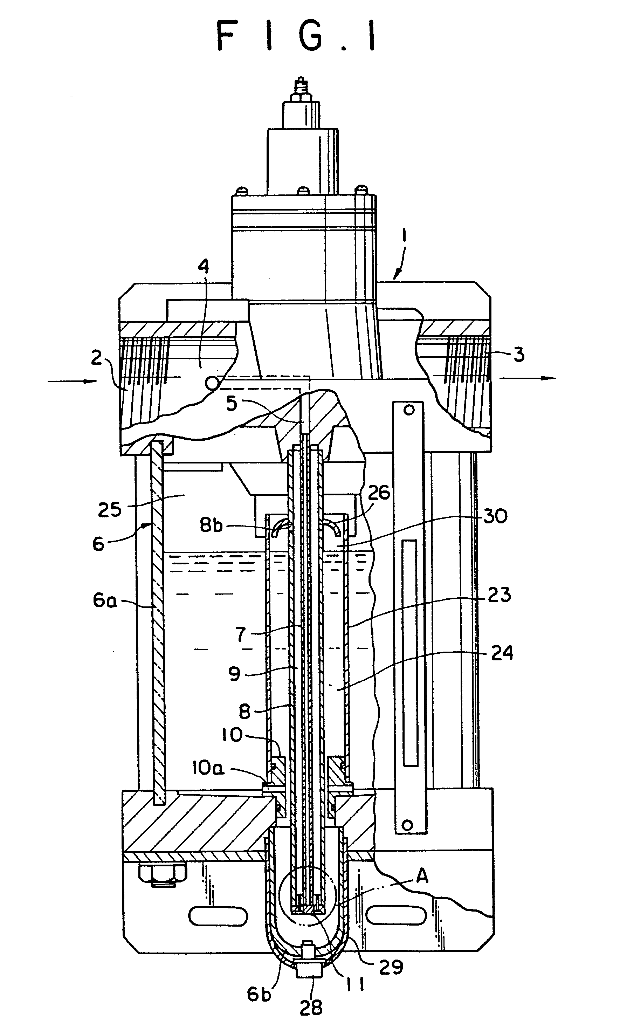

Fig. 1 eine Seitenansicht, teilweise weggebrochen, eines wesentlichen Teils eines nach der Erfindung ausgebildeten Ölnebelgenerators,

Fig. 2 eine demgegenüber vergrösserte Schnittdarstellung des Ausschnittes A von Fig. 1, und

Fig. 3 eine vergrösserte Schnittdarstellung, welche einen Teil des Ölnebelgenerators nach Fig. 1 veranschaulicht.

Der Ölnebelgeneratorkörper (nachfolgend kurz «Körper» genannt) 1 hat einen Drucklufteinlass 2 und einen Ölnebelauslass 3 sowie einen Durchlass 4, der den Einlass 2 und den Auslass 3 miteinander verbindet. Der Körper 1 hat ferner einen Abzweigungsdurchlass 5, der mit dem Durchlass 4 in Strömungsverbindung steht. Ein Ölbehälter 6 ist auf der Unterseite des Körpers 1 befestigt. Der Ölbehälter 6 hat einen oberen Behälterkörper 6a und einen unteren Behälterkörper 6b. Der untere Behälterkörper 6b steht in Strömungsverbindung mit dem oberen Behälterkörper 6a durch einen Verbindungszylinder 10, der weiter unten noch näher beschrieben wird. Eine Leitung 7 ist von einer zylindrischen Abdeckung 8 koaxial umgeben, wodurch ein Ölvernebelungsraum 9 zwischen Leitung 7 und Abdeckung 8 gebildet ist. Die Leitung 7 und die zylindrische Abdeckung 8 erstrecken sich in dem oberen Behälterkörper 6a. Ihr unterer Abschnitt durchdringt den Verbindungszylinder 10 und erstreckt sich in den unteren Behälterkörper 6b. Ihr anderes Ende, d.h. ihr oberes Ende, ist an dem Körper 1 befestigt. Die Leitung 7 und der Abzweigungsdurchlass 5 stehen in Strömungsverbindung miteinander.

Eine Ölvernebelungseinrichtung 11 am unteren Ende der Leitung 7 und der Abdeckung 8 hat einen inneren Zylinder 12, der an das untere Ende der Leitung 7 angeschraubt ist. Die Ölvernebelungseinrichtung 11 hat auch einen äusseren Zylinder 13, der einen oberen Abschnitt 14 mit verringertem Aussendurchmesser hat, auf welchen das untere Ende der zylindrischen Abdeckung 8 passt. Der innere Zylinder 12 hat eine Anzahl von in den Vernebelungsraum 9 mündenden Düsenöffnungen 16, die unmittelbar unter seinem Abschnitt gebildet sind, der mit der Leitung 7 verschraubt ist. Die Düsenöffnungen 16 haben in dem dargestellten Fall vergleichsweise geringen Querschnitt gegenüber demjenigen von weiteren in den Vernebelungsraum 9 mündenden Düsenöffnungen 32, welche über Verbindungsdurchlässe 17 in den inneren Zylinder 12 mit der Leitung 7 in Strömungsverbindung stehen. Die Düsenöffnungen 16 und 32 sind über den gesamten Umfang des inneren Zylinders 12 verteilt angeordnet.

Eine Bodenwandung 15 der Ölvernebelungseinrichtung hat Öffnungen 18, die entsprechend der Anzahl und Lage der Düsenöffnungen 32 gebildet sind. Einlassrohre 19 sitzen in den Öffnungen 18. Jedes der Einlassrohre 19 hat einen engen Durchlass 20, welcher zur Bodenwandung 15 hin offen ist und welcher am anderen Ende eine Auslassöffnung 21 aufweist, die mit dem Ölvernebelungsraum 9 in Strömungsverbindung steht, indem sie in die jeweilige Düsenöffnung 32 mündet. Das obere Ende jedes Einlassrohres 19 wird von einem schmalen Ringspalt 22 umgeben, der jeweils in Strömungsverbindung mit den Durchlässen 17 steht. Jede der Düsenöffnungen 32 ist also in unmittelbarer Nachbarschaft der Öffnung 21 jedes Durchlasses 20, der zum Ölvernebelungsraum 9 hin offen ist, angeordnet.

Eine zylindrische Führung 23 umgibt koaxial die Abdeckung 8, ähnlich wie letztere die Leitung 7 umgibt. Die zylindrische Führung 23 bildet einen weiteren Oberbehälter 24, der die zylindrische Abdeckung 8 umgibt. Der weitere Ölbehälter 24 ist am oberen Ende offen zu einem zweiten Trennraum 25 über einen ersten Trennraum 30 und steht am unteren Ende mit dem Verbindungszylinder 10 in Strömungsverbindung. Der Verbindungszylinder 10 hat radiale Durchlässe 10a, die seine Aussenseite mit seiner Innenseite verbinden. Der obere Behälterkörper 6a und der untere Behälterkörper 6b des Ölbehälters 6 stehen über die radialen Durchlässe 10a und den Innenraum des Verbindungszylinders 10 in Strömungsverbindung. Die zylindrische Abdeckung 8 hat einen Ölnebelabgabedurchlass 8b, der in seinem oberen Abschnitt gebildet ist. Eine Pufferplatte 26 ist an der zylindrischen Abdeckung 8 oberhalb des Ölnebelabgabedurchlasses 8b vorgesehen. Die Pufferplatte 26 hat Abstand von der inneren Umfangsfläche der zylindrischen Führung 23. Der so gebildete Raum stellt den ersten Trennraum 30 für Ölteilchen verschiedener Grösse dar.

Ein Ablasshahn 28 ist am unteren Ende des unteren Behälterkörpers 6b vorgesehen. Ein Gehäusedeckel 29 schützt den unteren Behälterkörper 6b.

Beim Einsatz des Ölnebelgenerators sind der Einlass 2 und der Auslass 3 des Körpers 1 an eine nicht dargestellte pneumatische Leitung angeschlossen, die zu der Schmiersektion eines Betätigungsorganes od.dgl. führt. Ein Teil der in den Einlass 2 eingeführten Druckluft wird durch den Abzweigungsdurchlass 5 in die Leitung 7 geführt und stösst durch die Düsenöffnungen 16 und 32 in den Ölvernebelungsraum 9. In diesem Moment wird das Schmieröl, das von dem Durchlass 20 zugeführt wird, mit der einströmenden Luft heftig vermischt, wodurch Ölnebel entsteht. Der so gebildete Ölnebel wird durch den Ölvernebelungsraum 9 geleitet und durch die oberen Ölnebelabgabedurchlässe 8b in den ersten Trennraum 30 eingeführt, der zwischen der zylindrischen Abdeckung 8 und der Führung 23 gebildet ist. Da der Ölnebel auf die Pufferplatte 26, die in dem ersten Trennraum 30 vorgesehen ist, und die Innenwandung der Führung 23 trifft, wird eine Teilchengrössentrennung bewirkt. In dem zweiten Trennraum 25 herrscht eine verringerte Luftströmungsgeschwindigkeit. Ölnebelteilchen von grosser Teilchengrösse fallen in den Öltank und lediglich feinteilige Ölnebelteilchen werden durch einen Durchlass 31 in den Körper 1 in den Druckluftstrom des Durchlasses 4 gefördert, um der Schmiersektion des zu schmierenden Betätigungsorgans od.dgl. zugeführt zu werden.

## Patentansprüche

1. Ölnebelgenerator mit einem Ölnebelgeneratorkörper (1), der einen Drucklufteinlass (2) und einen Ölnebelauslass (3) aufweist, die durch einen Durchlass (4) verbunden sind, mit einem an der Unterseite des Ölnebelgeneratorkörpers (1) angeordneten Ölbehälter (6), in dem eine zylindrische Abdeckung (8) angeordnet ist, innerhalb der sich eine Leitung (7) erstreckt, deren oberes Ende einlassseitig in Strömungsverbindung mit dem Durchlass (4) steht und deren unteres Ende über eine eine Bodenwandung (15) aufweisende Ölvernebelungseinrichtung (11) mit dem unteren Ende der zylindrischen Abdeckung (8) verbunden ist und somit einen zwischen Leitung (7) und Abdeckung (8) gebildeten Ölvernebelungsraum (9) begrenzt, welcher über Öffnungen mit dem Inneren der Leitung (7) und über Durchlässe (20) mit einem ausserhalb der zylindrischen Abdeckung (8) und der Bodenwandung (15) befindlichen Ölraum in Strömungsverbindung steht, und welcher über weitere Strömungswege (8b, 30, 35), auslassseitig mit dem Durchlass (4) verbunden ist, um Ölnebel zum Ölnebelauslass (3) zu führen, dadurch gekennzeichnet, dass die als Düsenöffnungen ausgebildeten Öffnungen zur Bildung von Ölnebel in unmittelbarer Nachbarschaft von Auslassöffnungen (21) der ölführenden Durchlässe (20) in den Ölvernebelungsraum (9) münden.

2. Ölnebelgenerator nach Anspruch 1, dadurch gekennzeichnet, dass die Auslassöffnungen (21) der ölführenden Durchlässe (20) jeweils von einem in eine der Düsenöffnung (32) mündenden Ringspalt (22) umgeben sind, welcher jeweils über einen Verbindungsdurchlass (17) mit dem Inneren der Leitung (7) in Strömungsverbindung steht.

3. Ölvernebelungsgenerator nach Anspruch 2, dadurch gekennzeichnet, dass die ölführenden Durchlässe (20) von in die Bodenwandung (15) eingesetzten, in die Düsenöffnungen (32) mündenden Einlassrohre (19) gebildet sind.

4. Ölvernebelungsgenerator nach einem der Ansprüche 1 bis 3, dadurch gekennzeichnet, dass stromauf der Düsenöffnungen (32) weitere mit dem Inneren der Leitung (7) in Strömungsverbindung stehende radiale Düsenöffnungen (16) für eine Luftzufuhr senkrecht zur Strömungsrichtung des Ölnebels in den Ölvernebelungsraum (9) münden.

5. Ölnebelgenerator nach einem der Ansprüche 1 bis 4, dadurch gekennzeichnet, dass die Ölvernebelungseinrichtung (11) einen an das untere Ende der Leitung (7) anschraubbaren inneren Zylinder (12) und einen äusseren Zylinder (13) aufweist, dass die Düsenöffnungen (16, 32) über den gesamten Umfang des inneren Zylinders (12) verteilt sind und dass der äussere Zylinder (13) einen oberen im Durchmesser verringerten Abschnitt (14) aufweist, auf welchen das untere Ende der zylindrischen Abdeckung (8) passt.

6. Ölnebelgenerator nach einem der Ansprüche 1 bis 5, dadurch gekennzeichnet, dass zwischen Ölbehälter (6) und Ölraum radiale Durchlässe (10a) für die Zuführung von Öl vorgesehen sind.

## Claims

1. Oil mist generator with an oil mist generator body (1) provided with a compressed air admission (2) and an oil mist outlet (3), which are connected by a passage (4), with an oil tank (6) provided at the underface of the oil mist generator (1), wherein a cylindrical hood (8) is provided wherein a conduit (7) extends whose upper end is on the admission side in flow connection with the passage (4) and whose lower end is, through an oil atomizing device (11) having a bottom wall (15), connected with the lower end of the cylindrical hood (8) and thus limits an oil atomizing chamber (9) formed between the conduit (7) and the hood (8), which is in flow connection through openings with the interior of the conduit (7) and through passages (20) with an oil chamber provided outside of the cylindrical hood (8) and the bottom wall (15), and which through further flow paths (8b, 30, 25, 31) is on the outlet side connected with the passage (4) in order to carry oil mist to the oil mist outlet (3), characterized in that the openings formed as nozzles for the generation of oil mist open immediately adjacent outlets (21) of the oil carrying passages (20) into the oil atomizing chamber (9).

2. Oil mist generator according to claim 1, characterized in that the outlets (21) of the oil carrying passages (20) are respectively surrounded by an annular clearance (22) opening into one of the nozzles (32) and via a connecting passage (17) being respectively in flow connection with the interior of the conduit (7).

3. Oil mist generator according to claim 2, characterized in that the oil carrying passages (20) are formed by admission tubes (19) installed in the bottom wall (15) and opening into the nozzles (32).

4. Oil mist generator according to one of claims 1 to 3, characterized in that upstream of the nozzles (32) further radial nozzles (16) being in flow connection with the interior of the conduit (7) open, for air admission vertically to the flow direction of the oil mist, into the oil atomizing chamber (9).

5. Oil mist generator according to one of the claims 1 to 4, characterized in that the oil atomizing device (11) is provided with an interior cylinder (12), which may be screwed to the lower end of the conduit (7), as well as with an outer cylinder (13), that the nozzles (16, 32) are distributed over the entire periphery of the inner cylinder (12), and that the outer cylinder (13) has an upper portion of reduced diameter (14) whereon fits the lower end of the cylindrical hood (8).

6. Oil mist generator according to one of claims 1 to 5, characterized in that between the oil tank (6) and the oil chamber radial passages (10a) for admission of oil are provided.

## Revendications

1. Générateur de brouillard d'huile avec un corps de générateur de brouillard d'huile (1) comportant une admission d'air comprimé (2) et une sortie de brouillard d'huile (3) liées par un passage (4), avec un réservoir d'huile (6), situé à la face intérieure du corps du générateur de brouillard d'huile (1), à l'intérieur duquel est disposé un couvercle cylindrique (8), à l'intérieur duquel s'étend une conduite (7), dont le bout supérieur se trouve, sur le côté d'admission, en liaison de flux avec le passage (4), et dont le bout inférieur est lié par un ensemble d'atomisation d'huile (11) comportant une paroi de fond (15) avec le bout inférieur du couvercle cylindrique (8), limitant ainsi un espace d'atomisation d'huile (9) formé entre la conduite (7) et le couvercle (8), qui, par des orifices, est en liaison de flux avec l'intérieur de la conduite (7) et, par des passages (20), avec un espace d'huile situé à l'extérieur du couvercle cylindrique (8) et du paroi de fond (15), et qui par d'autres voies de flux (8b, 30, 25, 31) est relié sur le côté de sortie avec le passage (4) pour conduire du brouillard d'huile à la sortie de brouillard d'huile (3), caractérisé en ce que les orifices en configuration d'orifices de gicleur pour génération de brouillard d'huile débouchent en voisinage immédiat d'orifices de sortie (21) des passages conduisant de l'huile (20) dans l'espace d'atomisation d'huile (9).

2. Générateur de brouillard d'huile selon revendication 2, caractérisé en ce que les orifices de sortie (21) des passages menant de l'huile (20) sont respectivement entourés d'une fente annulaire (22) débouchant dans un des orifices de gicleur (32) et se trouvant respectivement, par un passage de connexion (17), en liaison de flux avec l'intérieur de la conduite (7).

3. Générateur de brouillard d'huile selon revendication 2, caractérisé en ce que les passages menant de l'huile (20) sont constitués par des tuyaux d'admission (19) installés dans la paroi de fond (15) et débouchant dans les orifices de gicleur (32).

4. Générateur de brouillard d'huile selon une des revendications 1 à 3, caractérisé en ce qu'en amont des orifices de gicleur (32) d'autres orifices de gicleur radiaux (16), étant en liaison de flux avec l'intérieur de la conduite (7), débouchent, pour admission d'air verticalement à la direction de flux du brouillard d'huile, dans l'espace d'atomisation d'huile (9).

5. Générateur de brouillard d'huile selon une des revendications 1 à 4, caractérisé en ce que l'ensemble d'atomisation d'huile (11) comporte un cylindre intérieur (12), qui peut être vissé au bout inférieur de la conduite (7), et un cylindre extérieur (13), que les orifices de gicleur (16, 32) sont distribués sur l'entière périphérie du cylindre intérieur (12), et que le cylindre extérieur (13) comporte une partie supérieure au diamètre réduit (14), sur laquelle va le bout inférieur du couvercle cylindrique (8).

6. Générateur de brouillard d'huile selon une des revendications 1 à 5, caractérisé en ce qu'entre le réservoir d'huile (6) et l'espace d'huile il y a des passages radiaux (10a) pour l'admission d'huile.

# F I G . I

0 122 602

# F I G. 2

# F I G. 4

# F I G. 5

A-A SECTION

A-A SECTION

9

# F I G . 3